# EUROPÄISCHE PATENTANMELDUNG

(11) **EP 0 970 844 A1**
(43) Veröffentlichungstag der Anmeldung: **12.01.2000**
(21) Anmeldenummer: 99110987.7
(22) Anmeldetag: 09.06.1999
(51) Int. Cl.: B60N 2/36

(54) **Sitzmodul**

(30) Priorität: 09.06.1998 DE 29810333 U
(71) Anmelder: Johnson Controls GmbH, 51399 Burscheid (DE)
(72) Erfinder: Hoge, Ralf, 42477 Radevormwald (DE); Shafry, Gavriel, 58540 Meinerzhagen (DE)
(74) Vertreter: Patentanwälte Dr. Solf & Zapf

(57) **Zusammenfassung**

Die Erfindung betrifft ein Sitzmodul, insbesondere für einen Personenkraftwagen, mit einem am Fahrzeugboden befestigbaren Sitzteil (1), wobei das Sitzteil (1) aus seiner etwa waagerecht liegenden Gebrauchsstellung um eine in Fahrtrichtung (X) gesehen in einem vorderen Bereich angeordnete Querachse (Y-Y) in eine hierzu etwa senkrecht stehende Klappstellung schwenkbar und in einem in Fahrtrichtung (X) gesehen hinteren Bereich in der Gebrauchsstellung am Fahrzeugboden arretierbar ist. Um ein Sitzmodul zu schaffen, das sich bei Gewährleistung der erforderlichen Fahrsicherheit durch einen weiteren Einsatzbereich auszeichnet, weist das Sitzteil (1) einen derartigen Schwenk- und und Verriegelungsmechanismus auf, daß es zusätzlich zu der möglichen Schwenkbewegung (R) in Richtung der Querachse (Y-Y) verschiebbar geführt ist.

## Beschreibung

Die vorliegende Erfindung betrifft ein Sitzmodul, insbesondere für einen Personenkraftwagen, mit einem am Fahrzeugboden befestigbaren Sitzteil, wobei das Sitzteil aus seiner etwa waagerecht liegenden Gebrauchsstellung um eine in Fahrtrichtung gesehen in einem vorderen Bereich angeordnete Querachse in eine hierzu etwa senkrecht stehende Klappstellung schwenkbar und in einem in Fahrtrichtung gesehen hinteren Bereich in der Gebrauchsstellung am Fahrzeugboden arretierbar ist.

Derartige Sitzmodule sind bekannt und beispielsweise in der US-A-5 044 683 und in der US-A-5 248 178 beschrieben. Sie dienen insbesondere dazu, den Laderaum von Kraftfahrzeugen, vor allem von Personen-Kombifahrzeugen, zu vergrößern. Der Innenraum solcher Fahrzeuge ist in vielen Fällen so ausgelegt, daß der hinter den Rücksitzen befindliche Raum als Laderaum zum Transport von Gegenständen dient. Dieser Laderaum wird in der Gebrauchsstellung der Rücksitze durch die jeweilige Rückenlehne der Rücksitze gegenüber dem Fahrgastraum begrenzt. Üblicherweise befinden sich die Rücksitze dabei auf einer Rücksitzbank, die als ein einziges Sitzmodul ausgebildet ist und sich in der Regel über die ganze Breite des Fahrzeuginnenraums erstreckt. Sie können aber auch aus mehreren einzelnen, nebeneinander angeordneten Sitzmodulen gebildet sein. Eine Vergrößerung der Ladefläche des Fahrzeugs ist einerseits durch Umklappen der jeweiligen Rückenlehne und andererseits auch durch ein zusätzliches Umklappen des jeweiligen Sitzteils möglich. Im letzteren Fall wird in der Regel das Sitzteil des Sitzmoduls um einen Winkel von etwa 90° umgeklappt, so daß das Sitzteil gegenüber dem Fahrzeugboden eine etwa senkrechte Stellung einnimmt. Damit im Falle einer starken Verzögerung des Fahrzeugs, beispielsweise infolge einer Vollbremsung oder bei einem Frontalaufprall das Sitzteil keine Schwenkbewegung ausführt, ist es in dem in Fahrtrichtung gesehen hinteren Bereich in der Gebrauchsstellung am Fahrzeugboden arretierbar.

Der vorliegenden Erfindung liegt die Aufgabe zugrunde, ein Sitzmodul der eingangs beschriebenen Art zu schaffen, das sich bei Gewährleistung der erforderlichen Fahrsicherheit durch einen weiteren Einsatzbereich als die bekannten Sitzmodule auszeichnet.

Erfindungsgemäß wird dies dadurch erreicht, daß das Sitzteil einen derartigen Schwenk- und Verriegelungsmechanismus aufweist, daß es zusätzlich zu der möglichen Schwenkbewegung in Richtung der Querachse verschiebbar geführt ist.

Dadurch ergibt sich, insbesondere bei Verwendung von Sitzmodulen, deren Breite geringer als die Fahrzeugbreite, beispielsweise nur halb so groß wie Fahrzeugbreite, ist, eine Vielzahl von Anordnungsmöglichkeiten des Sitzmoduls, die beispielsweise zur Vergrößerung des Laderaumes ausgenutzt werden können.

Dabei ist es insbesondere von Vorteil, wenn das Sitzmodul derart ausgebildet ist, daß das Sitzteil in mindestens zwei, aber auch - z.B. bei Installation auf der Ladefläche von teilweise zum Personentransport dienenden Lastkraftwagen oder Kleinbussen - einer größeren Anzahl von bevorzugten Verschiebestellungen in der Gebrauchsstellung am Fahrzeugboden arretierbar ist. Auf diese Weise kann eine optimale Aufteilung des Kraftfahrzeug-Innenraumes in unterschiedliche Räume zur Nutzung für den Personen- und für den Gütertransport erfolgen, wobei die zu befördernden Güter nicht nur hinter sondern auch seitlich eines Sitzmoduls angeordnet werden können, das sich in seiner dem Personentransport dienenden Gebrauchsstellung befindet.

Erfindungsgemäß ist weiterhin vorgesehen, daß der Schwenk- und und Verriegelungsmechanismus derart ausgebildet ist, daß durch Aufhebung der Verriegelungsstellung die Querachse freigegeben wird. Hierdurch ist es insbesondere möglich, das Sitzmodul leicht zu entfernen. Dabei ist es zudem von Vorteil, wenn unterseitig am Sitzmodul im Bereich des Schwenk- und Verriegelungsmechanismus Roll- oder Gleitvorrichtungen angeordnet sind.

Weitere vorteilhafte Ausgestaltungsmerkmale der Erfindung sind in den Unteransprüchen sowie der folgenden Beschreibung enthalten.

Anhand eines mittels der Zeichnung veranschaulichten, bevorzugten Ausführungsbeispiels wird im folgenden die Erfindung näher erläutert. Dabei zeigen:
- Fig. 1: in einer perspektivischen Ansicht gesehen aus einem vorderen Fahrzeugbereich ein erfindungsgemäßes Sitzmodul in einer Schwenkposition zwischen seiner Gebrauchsstellung und seiner etwa senkrechten Klappstellung,
- Fig. 2: eine Seitenansicht des erfindungsgemäßen Sitzmoduls aus Fig. 1 in seiner Gebrauchsstellung und
- Fig. 3: in perspektivischer Ansicht wie in Fig 1, jedoch gesehen aus einem hinteren Fahrzeugbereich das erfindungsgemäße Sitzmodul gemäß Fig. 1 in seiner etwa senkrechten Klappstellung,
- Fig. 4: eine Seitenansicht des erfindungsgemäßen Sitzmoduls in der perspektivisch in Fig. 3 dargestellten Klappstellung.

In den verschiedenen Figuren der Zeichnung sind gleiche Teile stets mit den gleichen Bezugszeichen versehen und werden daher in der Regel auch jeweils nur einmal beschrieben.

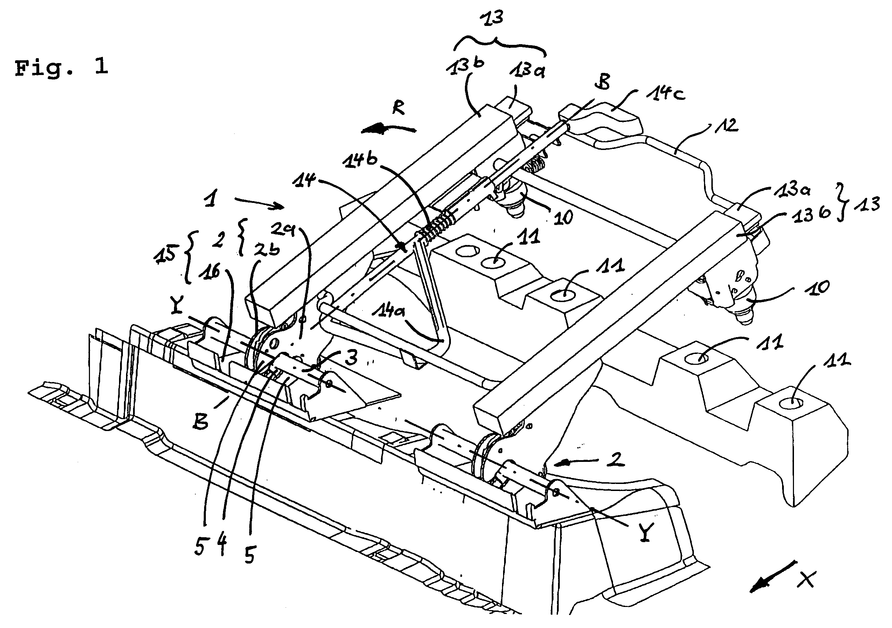

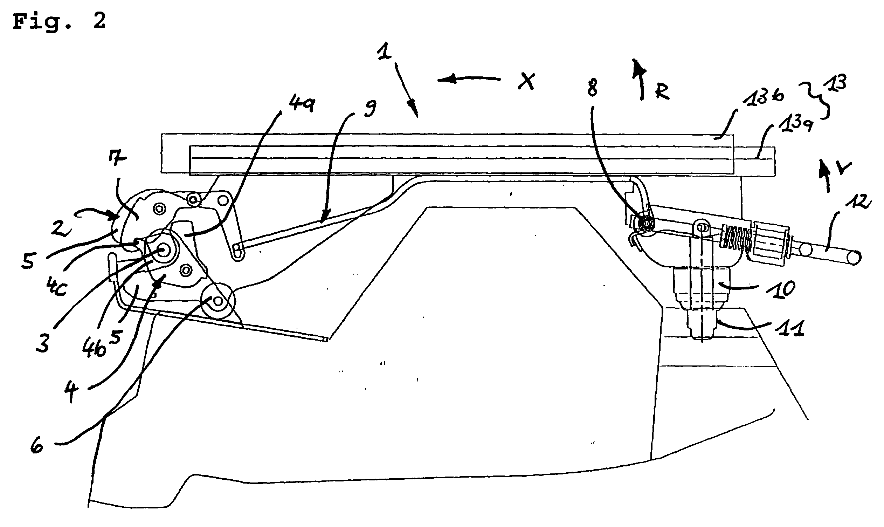

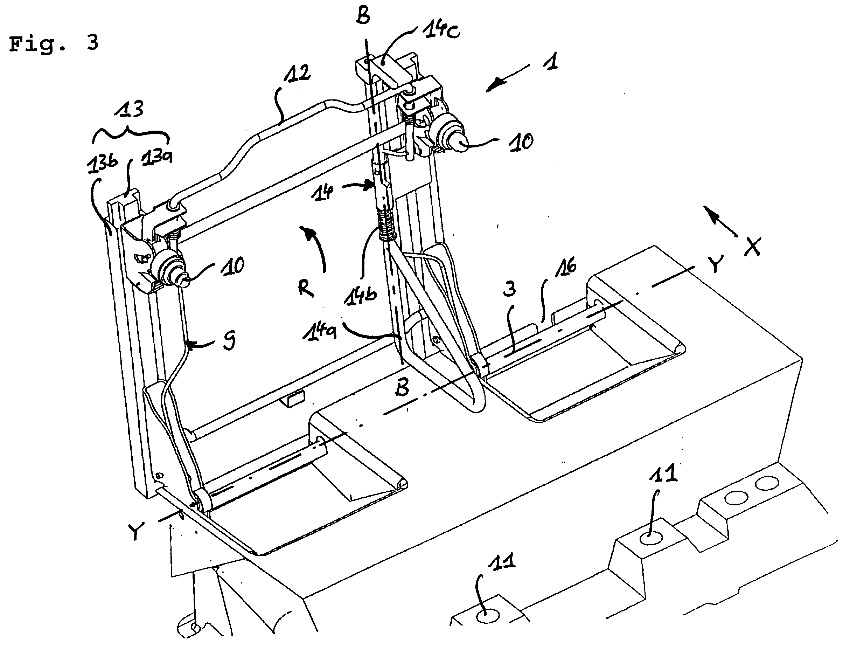

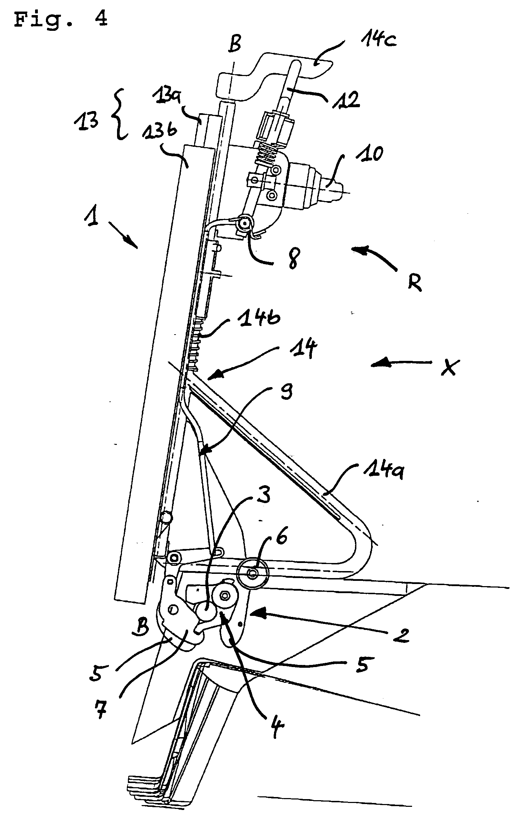

Ein erfindungsgemäßes Sitzmodul, insbesondere für einen Personenkraftwagen, besitzt, wie zunächst die Zwischenstellung in Fig. 1 zeigt, ein am Fahrzeugboden befestigbares Sitzteil 1, das aus einer etwa waagerecht liegenden Gebrauchsstellung (Fig. 2) um eine in Fahrtrichtung (Richtungspfeil X) gesehen in einem vorderen Bereich angeordnete Querachse Y-Y in eine hierzu etwa senkrecht stehende Klappstellung (Fig. 3, Fig. 4) schwenkbar (Richtungspfeil R) und in einem in Fahrtrichtung X gesehen hinteren Bereich in der Gebrauchsstellung am Fahrzeugboden arretierbar ist. Das Sitzteil 1 ist ohne ihm zugehörigen Polster- und Bezugsteile dargestellt.

Erfindungsgemäß ist das Sitzteil 1 im Bereich der Querachse Y-Y mit einem derartigen Schwenk- und Verriegelungsmechanismus ausgestattet, daß es, wenn es sich nicht in der Gebrauchs- oder in der Klappstellung befindet, zusätzlich zu der möglichen Schwenkbewegung R in Richtung der Querachse Y-Y verschiebbar ist.

Diese Querverschieblichkeit des Sitzteiles 1 wird dadurch erreicht, daß es beidseitig eine zweiendige Haltegabel 2 aufweist, die jeweils einen ortsfest zum Fahrzeugboden montierten, in Richtung der Querachse Y-Y verlaufenden Stangenabschnitt 3 scharnierartig umgreift. An den beiden Haltegabeln 2 befindet sich jeweils ein Verriegelungsteil 4, das, wie insbesondere Fig. 2 zeigt, nach der Art eines Fallschlosses ausgebildet sein kann und die nicht näher bezeichnete, zwischen den Gabelenden 5 befindliche Gabelöffnung in einem (dem dargestellten) arretierten Zustand verschließt, so daß die Stangenabschnitte 3 von den Gabelenden 5 und dem Verriegelungsteil 4 umfangsmäßig vollständig umschlossen sind.

Bei Entarretierung des Verriegelungsteiles 4 wird die Gabelöffung freigegeben, so daß das Sitzteil 1 aus dem Bereich der Querachse Y-Y entfernbar und, von den Stangenabschnitten 3 insbesondere in einem spitzen Winkel zur Fahrzeuglängsachse, der ausreichend ist, um die nachstehend näher beschriebene Arretierung in der Gebrauchstellung aufzuheben, entgegen der Fahrtrichtung X, frei abziehbar ist. Zur Unterstützung dieser Abzugsbewegung können, wie ebenfalls aus Fig. 2 hervorgeht, an der Unterseite der Haltegabel 2 Rollen 6 vorgesehen sein, die in bzw. auf bodenseitigen Bahnen geführt sein können.

Die in der dargestellten Ausführung fallschloßartige Ausbildung des Verriegelungsteiles 4 besteht darin, daß jeweils eine Haltegabel 2 aus zwei Gabelwangen 2a, 2b gebildet ist, zwischen denen ein drehbarer Winkelhebel derart befestigt ist, daß sich dieser bei Druck eines Stangenabschnittes 3 auf einen seiner Hebelarme 4a in eine Position dreht, in der der andere Hebelarm 4b des Winkelhebeis die Gabelöffnung verschließt, wobei das Ende 4c dieses Hebelarmes 4b rastend in eine korrespondierende Öffnung eines Fallenteils 7 eingreift. Dieser Zustand ist in Fig. 2 dargestellt. Beispielsweise durch einen Bowdenzug oder - wie dargestellt - durch eine entgegen der Kraft einer Haltefeder 8 wirkende, manuell bedienbare Hebel-Gestängemechanik 9 kann die Eingriffstellung des Hebelarmes 4b in das Fallenteil 7 wieder aufgehoben werden.

Die Arretierung des Sitzteils 1 in der Gebrauchsstellung in seinem in Fahrtrichtung X gesehen hinteren Bereich am Fahrzeugboden kann auf verschiedenartige Weise geschehen. In der dargestellten Ausführung ist beispielsweise eine aus der EP 0 747 554 A1 bekannte Arretierung dargestellt. Dabei wird ein stift- bzw. bolzenförmiges Befestigungselement 10 in eine bodenfeste Halteöffnung 11 eingesteckt. Innerhalb des Befestigungselementes 10 ist mindestens eine (in der Zeichnung nicht dargestellte) Sperrkugel derart beweglich angeordnet, daß diese in der eingesetzten und verriegelten Stellung durch eine Öffnung des Befestigungselementes 10 hin-durch bereichsweise seitlich nach außen ragt und den Rand der Halteöffnung 8 hintergreift. Zum Entriegeln wird ein innerer Sperrbolzen aus dem Bereich der Sperrkugel weggezogen, so daß letztere nach innen ausweichen kann und dadurch das Befestigungselement 10 aus der Halteöffnung 11 entnehmbar ist. Durch eine solche oder ähnliche Arretierung ist das Sitzteil 1 in seiner Gebrauchsstellung sowohl gegen eine ungewollte Schwenkbewegung (in Richtung R) als auch gegen eine unerwünschte laterale Bewegung (entlang der Querachse Y-Y) gesichert.

Wie Fig. 1 zeigt, ist das Sitzteil 1 in der dargestellten Ausführung in zwei Verschiebestellungen relativ zur Querachse Y-Y in seiner Gebrauchsstellung am Fahrzeugboden arretierbar. Zu diesem Zweck sind für ein Befestigungselement 10 jeweils zwei Halteöffnungen 11 entsprechend den beiden Verschiebestellungen des Sitzteiles vorgesehen.

Die manuelle Bedienung zur Entarretierung sowohl des Verriegelungsteiles 4 als auch des Sitzteils 1 (bewirkt durch das Befestigungselement 10 in der bodenseitigen Halteöffnung 11) kann über ein gemeinsames Betätigungsteil 12 erfolgen. Dadurch wird die Bedienung einfach und komfortabel. In der dargestellten Ausführung wird die Entarretierung des Verriegelungsteiles 4 durch ein Ziehen des Betätigungsteiles 12 etwa entgegen der Fahrtrichtung X bewirkt, während die Entarretierung des Sitzteils 1 durch ein Nach-Oben-Schwenken des Betätigungsteiles 12 (in Richtung des Pfeiles V in Fig. 2) ausgelöst wird.

Der erfindungsgemäße Schwenk- und Verriegelungsmechanismus umfaßt somit in der dargestellten Ausführung des erfindungsgemäßen Sitzmoduls die Haltegabeln 2, die Stangenabschnitte 3, das Verriegelungteil 4, das Fallenteil 7, die Haltefeder 8, die Hebel-Gestänge-Mechanik 9 und das Betätigungsteil 12.

Wie Fig 1 und insbesondere Fig. 2 des weiteren veranschaulichen, können mit den Haltegabeln 2 verbundene Rahmenteile 13a, 13b eines Sitzrahmens 13 des Sitzteiles 1 derart ausgebildet sein, daß sie eine Längsverschieblichkeit des Sitzteils 1 in und entgegen der Fahrtrichtung X ermöglichen. Dies kann - wie dargestellt- beispielsweise dadurch realisiert werden, daß ein erstes, beispielsweise ein T-oder ein Schwalbenschwanz-Profil aufweisendes, mit einer Haltegabel 2 fest verbundenes Rahmenteil 13a in einem zweiten Rahmenteil 13b schienenartig geführt ist. An einem der beiden Rahmenteile 13a, 13b - ind der dargestellten Ausführung am ersten Rahmenteil 13a kann das Sitzpolster einschließlich der Rückenlehne in einem in Fahrtrichtung x gesehen hinteren Bereich befestigt sein.

Fig. 3 und 4 zeigen, wie bereits erwähnt, in perspektivischer und in Seitenansicht das erfindungsgemäße Sitzmodul in seiner etwa senkrechten Klappstellung. Bei der Betrachtung dieser beiden Figuren wird deutlich, daß das erfindungsgemäße Sitzmodul in der vertikalen Klappstellung einerseits einen Arretierungsmechanismus 14, der das Sitzteil 1 gegen ein ungewolltes Zurückschwenken bzw. Zurückfallen aus seiner Klappstellung in seine etwa waagrecht liegenden Gebrauchsstellung sichert, und andererseits Sicherungselemente 15 gegen die laterale Verschiebebewegung des Sitzteiles 1 aufweist.

Der Arretierungsmechanismus 14, der das Sitzteil 1 gegen ein Zurückschwenken aus der Klappstellung sichert, besteht aus einem drehbaren Bügel. Der Bügel ist so an dem Sitzrahmen 13 befestigt, daß seine Drehachse B-B etwa parallel zu den Rahmenteilen 13a, 13b verläuft. Ein von der Drehachse B-B abragender Fuß 14a des Bügels liegt in der entarretierten Stellung des Bügels etwa in einer Ebene mit dem Sitzrahmen 13. Zur Arretierung in der Klappstellung kann dieser Fuß 14a in eine Ebene gedreht werden, die etwa senkrecht zu der des Sitzrahmens 13 verläuft, wobei sich der Fuß 14a bodenseitig abstützt und auf diese Weise durch Formschluß einerseits mit dem Sitzteil 1, beispielsweise, wie gezeigt, mit zwei zwischen den Rahmenteilen befestigten Querstreben 13c des Sitzrahmens 13, und andererseits mit dem Boden das Zurückklappen des Sitzteiles 1 in seine Gebrauchsstellung sperrt. Wie die Fig. 1, 3 und 4 der Zeichnung zeigen, kann der Arretierungsmechanismus 14 zur Sicherung des Sitzteiles 1 gegen ein Zurückschwenken in die Gebrauchsstellung auch eine Feder 14b, hier eine Schrauben- bzw. Schenkelfeder, umfassen, unter deren Wirkung der Bügel bei Überführung des Sitzteils 1 in die Klappstellung automatisch um seine Drehachse B-B in die Arretierstellung gedreht wird. Die Rückführung in die entarretierte Stellung kann - wie dargestellt - mittels einer Handhabe 14c gegen die Kraft der Feder 14b erfolgen.

Als Sicherungselemente 15 gegen eine laterale Verschiebung des Sitzteiles 1 in seiner Klappstellung dienen in der dargestellten Ausführung des erfindungsgemäßen Sitzmoduls einerseits die Haltegabeln 2, andererseits bodenseitige, den beiden vorgesehenen arrtierbaren Verschiebestellungen des Sitzteiles 1 relativ zur Querachse Y-Y entsprchende Schlitze 16, in die die Haltegabeln 2 bei Vorhandensein der Klappstellung des Sitzteiles 1 formschlüssig eingreifen. Beim Zurückschwenken des Sitzteiles 1 in Richtung seiner Gebrauchsstellung (entgegen Pfeil R) werden die Haltegabeln 2 aus den Schlitzen 16 bewegt, so daß eine laterale Verschiebung des Sitzteiles entlang der Querachse Y-Y möglich ist (vgl. Fig. 1).

Die vorliegende Erfindung ist nicht auf das dargestellte Ausführungsbeispiel beschränkt, sondern umfaßt auch alle im Sinne der Erfindung gleichwirkenden Ausführungen. Zur Erfüllung der an die Schwenk- und Verriegelungsmechanik gestellten Funktionsaufgaben lassen sich neben mechanischen Elementen selbstverständlich auch beispielsweise elektromagnetisch oder hydraulisch betätigte Elemente einsetzen. Als einfache mechanische Bewegungsübertragungselemente sind, wie vorstehend beschrieben, Stangen, Züge und dergleichen geeignet. Das beschriebene Ausführungbeispiel dient lediglich der Verdeutlichung des Funktionsablaufes, nämlich der erfindungsgemäßen Bewegbarkeit und Arretierbarkeit.

Zur Arretierung des Sitzteils 1 in der Gebrauchsstellung in seinem in Fahrtrichtung X gesehen hinteren Bereich am Fahrzeugboden kann anstelle der dargestellten Ausführung beispielsweise auch eine Ausführung verwendet werden, wie sie in der deutschen Gebrauchsmusteranmeldung DE 298 04 542 vorgeschlagen wurde, wonach ein sitzseitiges Halterungselement, das etwa dem vorstehend beschriebenen Befestigungselement 10 entspricht, zangenartig mit zwei gelenkig verbundenen Halteschenkeln ausgebildet ist, die das Halterungselement in einem zusammengeführten Arretierzustand formschlüssig mit einem bodenseitigen Halteteil verbinden. Auch die deutsche Gebrauchsmusteranmeldung DE 298 08 871, auf die hier in vollem Umfang verwiesen werden kann, enthält eine weitere alternative technische Möglichkeit zur Verriegelung des Sitzteiles 1 am Fahrzeugboden.

Weiterhin kann der Fachmann zusätzliche Maßnahmen in Kombination mit der vorstehend beschriebenen Merkmalen des erfindungsgemäßen Sitzmoduls vorsehen. So sollen Rückenlehnen von Sitzen in Kraftfahrzeugen bekanntermaßen einerseits in der für die Fahrt zu wählenden Fahrtposition bezüglich ihrer Neigung über einen bestimmten Schwenkbereich hinweg individuell verstellbar sein, was in Kombination mit den vorstehend beschriebenen Maßnahmen des erfindungsgemäßen Sitzmoduls vorgesehen werden kann. Andererseits ist es vor allem für Mittel- oder Rücksitze häufig erwünscht, die Rückenlehne in eine etwa horizontale Lage auf das zugehörige Sitzpolsterteil umzulegen, wobei es sich dabei um eine sogenannte Tischposition handelt, in der die Rückenlehne mit ihrer Rückseite als Tischfläche genutzt werden kann. Auch dies kann im Verein mit den vorstehend beschriebenen Merkmalen des erfindungsgemäßen Sitzmoduls auf einfache Weise realisiert werden.

Ferner ist die Erfindung nicht auf die im Anspruch 1 definierte Merkmalskombination beschränkt, sondern kann auch durch jede beliebige andere Kombination von bestimmten Merkmalen aller insgesamt offenbarten Einzelmerkmale definiert sein. Dies bedeutet, daß grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Sitzmodul, insbesondere für einen Personenkraftwagen, mit einem am Fahrzeugboden befestigbaren Sitzteil (1), wobei das Sitzteil (1) aus seiner etwa waagerecht liegenden Gebrauchsstellung um eine in Fahrtrichtung (X) gesehen in einem vorderen Bereich angeordnete Querachse (Y-Y) in eine hierzu etwa senkrecht stehende Klappstellung schwenkbar und in einem in Fahrtrichtung (X) gesehen hinteren Bereich in der Gebrauchsstellung am Fahrzeugboden arretierbar ist,
**dadurch gekennzeichnet**, daß das Sitzteil (1) einen derartigen Schwenk- und Verriegelungamechanismus aufweist, daß es zusätzlich zu der möglichen Schwenkbewegung (R) in Richtung der Querachse (Y-Y) verschiebbar geführt ist.

2. Sitzmodul nach Anspruch 1,
**dadurch gekennzeichnet**, daß das Sitzteil (1) an seiner Unterseite im Bereich des Schwenk- und Verriegelungsmechanismus Gleit- oder Rollvorrichtungen (6) aufweist.

3. Sitzmodul nach Anspruch 1 oder 2,
**dadurch gekennzeichnet**, daß das Sitzteil (1) durch Entarretierung eines Verriegelungsteiles (4) des Schwenk- und Verriegelungsmechanismus von einem die Querachse (Y-Y) bildenden Stangenteil (3) lösbar ist.

4. Sitzmodul nach einem der Ansprüche 1 bis 3,
**gekennzeichnet durch** Rahmenteile (13a, 13b) eines Sitzrahmens (13) des Sitzteils (1), die derart ausgebildet sind, daß sie eine Längsverschieblichkeit des Sitzteils (1) in und entgegen der Fahrtrichtung (X) ermöglichen.

5. Sitzmodul nach einem der Ansprüche 1 bis 4,
**gekennzeichnet durch** einen Arretierungsmechanismus (14), der das Sitzteil (1) gegen ein Zurückschwenken aus seiner etwa senkrecht stehenden Klappstellung in seine etwa waagerecht liegenden Gebrauchsstellung sichert.

6. Sitzmodul nach einem der Ansprüche 1 bis 5,
**gekennzeichnet durch** Sicherungselemente (15 bzw. 2, 15), die in der Klappstellung die Verschiebebewegung des Sitzteiles (1) entlang der Querachse (Y-Y) verhindern.

7. Sitzmodul nach einem der Ansprüche 1 bis 6,
**gekennzeichnet durch** eine am Sitzteil (1) befestigte neigungsverstellbare Rückenlehne, die aus einer etwa senkrecht stehenden Normalposition um eine in ihrem dem Sitzteil (1) zugekehrten Bereich angeordnete Schwenkachse in Richtung des Sitzteils (1) in eine etwa waagerecht liegende Tischposition umlegbar ist.
